# FASCICULE DE BREVET EUROPEEN

(11) **EP 0 243 312 B1**
(45) Date de publication et mention de la délivrance du brevet: **19.07.1995**
(21) Numéro de dépôt: 87810236.7
(22) Date de dépôt: 14.04.1987
(51) Int. Cl.: H04N 7/16, H04N 7/087, G07F 7/00, G07F 7/08

(54) **Décodeur pour un système de télévision à péage**
Decoder für ein Fernsehgebührensystem
Decoder for a pay television system

(30) Priorité: 18.04.1986 CH 1576/86
(43) Date de publication de la demande: 28.10.1987
(60) Demande divisionnaire: 94112343.2
(73) Titulaire: NAGRA PLUS S.A., CH-1033 Cheseaux-sur-Lausanne (CH)
(72) Inventeur: Kudelski, André, CH-1023 Crissier (CH); Laffely, Laurent, CH-1052 Le Mont-sur-Lausanne (CH); Sasselli, Marco, CH-1803 Chardonne (CH)
(74) Mandataire: Cronin, Brian Harold John

(56) Documents cités:
- EP-A- 0 014 654
- EP-A- 0 126 495
- EP-A- 0 128 555
- WO-A-86/01962
- DE-A- 2 607 868
- INTERNATIONAL BROADCASTING CONVENTION, Brighton, September 21-25, 1984, pages 289-295, IEEE, New York, US, N.SETH-SMITH: "Implementation of a secure pay DBS system with billing in the receiver"
- SCIENTIFIC AMERICAN, vol. 253, no.5, November 1985, pages 130-137, New York, US, R. McIVOR: "Smart cards"
- INT.CONF.ON SECURE COMMUNICATION SYSTEMS, 22-23 février 1984, pages 71-78; IEE, Londres, GB, S.M. EDWARDSON: "Scrambling and encryption for direct broadcasting by satellite"

## Description

La présente invention concerne un décodeur pour un système de télévision à péage.

Dans un système de télévision à péage (pay-TV), et de manière générale, l'abonné choisit les programmes qu'il désire regarder et il paie pour recevoir ces programmes qui sont transmis sous forme brouillée afin d'être inintelligibles aux non abonnés ou aux abonnés qui n'ont pas choisi, ni payé pour un programme particulier. Les signaux peuvent être transmis par câble, antenne ou satellite.

Le document WO-A-8102499 concerne un procédé et un système pour le brouillage de la transmission d'information vidéo, particulièrement pour la télévision à péage. Des parties du signal vidéo, par exemple des parties ou segments de lignes, des lignes ou des trames sont transmises dans un ordre différent de leur séquence naturelle. La manière de réarranger la séquence des segments de lignes pour la transmission peut être contrôlée par un générateur de code qui change la séquence à chaque trame ou en fonction d'une autre base de temps adéquate. Le code, qui peut être chiffré, varie de manière aléatoire et il peut être entièrement ou partiellement transmis avec le signal vidéo brouillé.

A la réception, un décodeur reçoit le signal vidéo embrouillé ainsi qu'un code de débrouillage, et restitue le signal débrouillé par l'application d'une fonction inverse à celle utilisée à l'émission. Dans ce système connu, ceci nécessite l'utilisation de deux mémoires successives, l'une pour stocker le signal embrouillé reçu, et l'autre pour la lecture/débrouillage.

L'invention concerne un décodeur pour un système de télévision à péage comprenant une mémoire agencée pour recevoir un signal vidéo embrouillé par permutation des lignes, dans lequel chaque ligne est échantillonnée et numérisée en un nombre d'échantillons, et des moyens pour débrouiller le signal vidéo mémorisé selon un code de débrouillage variable.

Selon l'invention, cette mémoire du décodeur est constituée par un buffer de lignes, par exemple 32 lignes, où les échantillons du signal vidéo embrouillé sont introduits séquentiellement dans des cellules successives, chaque ligne du buffer étant constituée d'autant de cellules que nécessaire pour stocker le nombre d'échantillons d'une ligne du signal vidéo.

Dans cette mémoire, l'entrée de chaque échantillon dans une cellule du buffer provoque la sortie de cette cellule de l'échantillon mémorisé déjà présent dans cette même cellule, de sorte que la mémoire est toujours remplie du nombre de lignes et qu'une ligne du buffer est toujours remplie du nombre d'échantillons qu'elle peut contenir.

Enfin, l'ordre de sortie des lignes du buffer mémorisées pour effectuer le débrouillage est déterminé par la sélection, sous commande du code de débrouillage, parmi les lignes du buffer, de celles qui permettent la dépermutation des lignes.

D'autres caractéristiques de l'invention sont exposées dans les sous-revendications.

L'invention va être expliquée ci-après à l'aide de la description d'une forme d'exécution illustrée dans le dessin.
La figure 1 montre le principe d'un système de télévision à péage,
La figure 2 montre le principe de l'entrée et de la sortie d'une ligne du signal vidéo dans un buffer de 32 lignes,
La figure 3 montre un schéma bloc du décodeur selon l'invention,
La figure 4 montre le principe du brouillage et du débrouillage des signaux vidéo transmis,
La figure 5 montre la rotation d'une ligne du signal vidéo,
La figure 6 montre l'inversion d'une ligne du signal vidéo,
La figure 7 montre une symétrie miroir d'une ligne du signal vidéo,
La figure 8 montre un schéma-bloc de la carte CPTV,
La figure 9 montre la structure physique d'une ligne du signal vidéo,
La figure 10 montre la structure des données physiques dans le système de transmission de données Didon, et
La figure 11 montre la structure des données dans le système Didon.

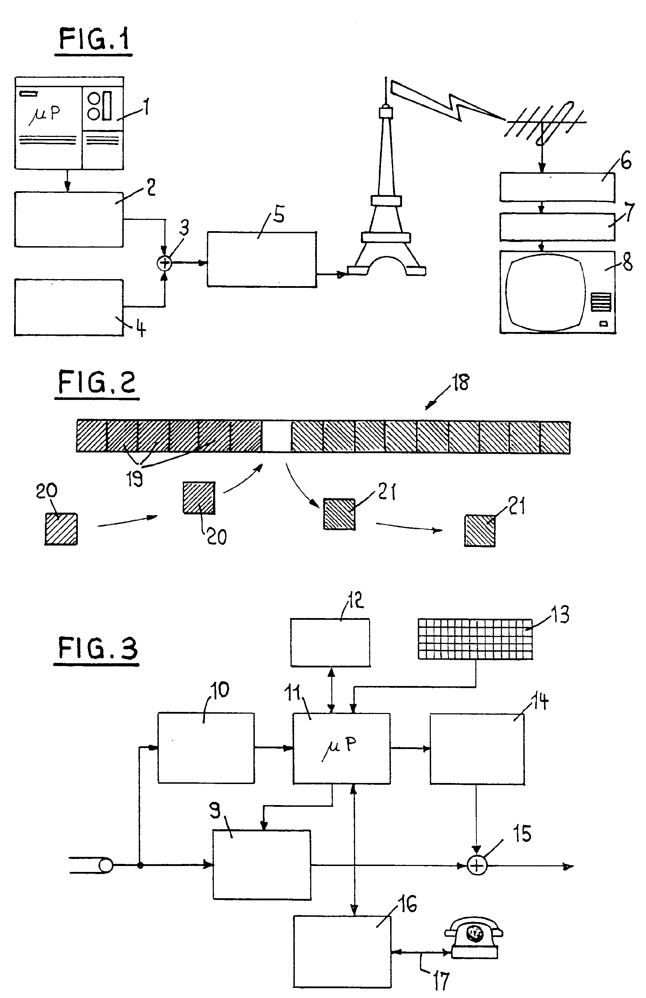

En figure 1, un micro-ordinateur 1 est prévu pour générer des données selon un format de télétexte relatives aux programmes des émissions prévues telles que titre, prix, date ou période d'émission, etc. ainsi que d'autres informations utiles à l'utilisateur. Ces données sont introduites en 3 par un interface 2 dans le signal vidéo délivré par une caméra 4 ou tout autre élément producteur de signal vidéo. Les lignes du retour du balayage vertical du signal vidéo qui ne transmettent normalement aucune information sont utilisées pour transmettre les données de télétexte, de sorte que celles-ci sont transmises en même temps que le signal vidéo.

Le signal vidéo avec les données de télétexte est ensuite délivré à un brouilleur 5 qui permet de brouiller l'image, par permutation des lignes, éventuellement combinée avec un brouillage supplémentaire dans un "brouillage profond". Le signal brouillé est transmis par voie hertzienne, par câble vidéo ou par satellite au récepteur 6 du souscripteur. Le récepteur comporte un débrouilleur ou décodeur 7 qui délivre le signal débrouillé au téléviseur 8.

Le signal brouillé est compatible avec les normes SECAM et PAL(NTSC). Le brouillage peut être exécuté en version normale ou en version profonde. En version normale, les lignes vidéo sont permutées entre elles, seule la partie active de la ligne étant permutée. Dans le système SECAM, une ligne paire est permutée avec une ligne paire et une ligne impaire est permutée avec une ligne impaire. Dans le système PAL(NTSC), le burst (fréquence porteuse couleur) est laissé inchangé. Chaque ligne est échantillonnée et digitalisée sur 8 bits à une fréquence d'échantillonnage f = 3 x f_{burst} ou f = 4 x f_{burst} synchrone au burst, de sorte que dans le système PAL(NTSC), la phase couleur est conservée. Chaque ligne est ainsi divisée en principe en 3 (ou 4)x 256 segments de 8 bits.

Le principe de l'entrée et de la sortie d'une ligne du signal vidéo dans un buffer de 32 lignes sera expliqué plus loin en se référant à la figure 2.

La figure 3 montre que le signal vidéo en provenance de la station de tête (émettrice) est délivré à une mémoire buffer 9 de 32 lignes permettant d'effectuer la dépermutation des lignes comme indiqué ci-dessous et à un récepteur de données de télétexte 10. Les données en format de télétexte sont transmises en même temps et par le même canal que le signal vidéo, ces données étant transmises par les lignes de retour du balayage vertical du signal vidéo. Un microprocesseur 11 est l'élément central du décodeur 7. Il comprend des mémoires mortes et vives pour toutes les informations susceptibles d'être affichées sur le téléviseur, ces informations qui sont en forme de données en format de télétexte, étant en partie transmises par la station de tête et mémorisées dans une mémoire vive du microprocesseur et en partie mémorisées dans une mémoire morte du microprocesseur 11.

Le microprocesseur 11 est associé à une carte de sécurité dite CPTV (carte Pay TV) 12, normalement insérée dans le décodeur 7, et à un clavier 13 de celui-ci. Le microprocesseur 11 délivre, sur appel à l'aide du clavier 13, les données de télétexte sous forme numérique adéquate à un générateur de texte 14 commandant l'affichage du téléviseur. Le microprocesseur 11, en liaison avec la carte CPTV 12, commande la mémoire buffer 9 pour dépermuter les lignes. Le signal vidéo débrouillé ainsi que celui du générateur de texte sont à disposition en 15 pour être affichés sur le téléviseur 8. En outre, le microprocesseur 11 est aussi relié à un modem 16 connecté lui-même à une ligne téléphonique 17.

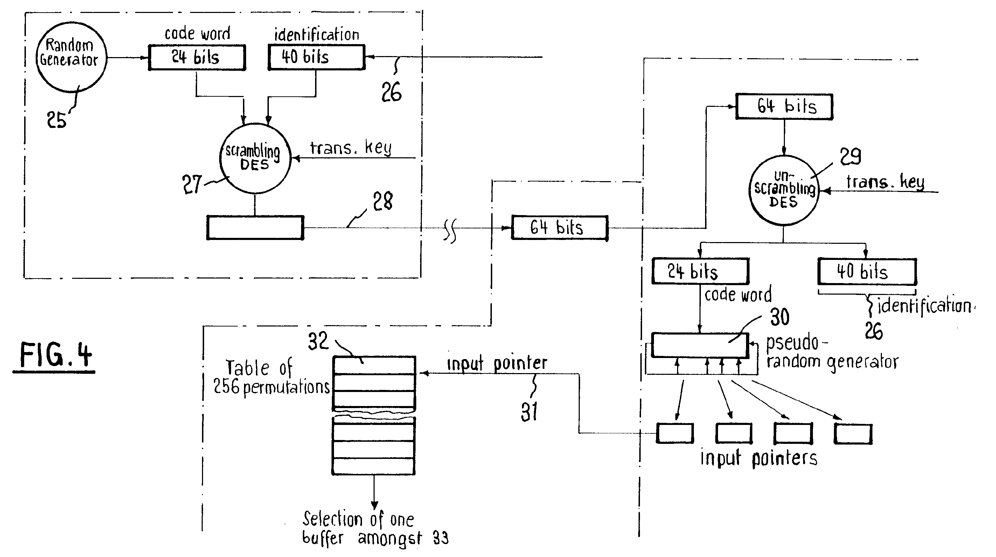

La figure 4 montre le principe du brouillage et débrouillage des signaux vidéo transmis. A l'émission, un générateur de hasard 25 produit des mots de code en temps réel. Une information 26 relative à l'identification de l'émission à transmettre est délivrée avec une clé de transmission 34 et le mot de code à un système de chiffrage 27, qui délivre en temps réel le signal chiffré 28 à transmettre. La clé de transmission 34 peut être transmise sous forme codée. A la réception, le signal transmis est délivré avec la clé de transmission au système de déchiffrage 29, par exemple selon le système DES qui délivre le mot de code déchiffré (pour autant que l'émission en cours ait été achetée) et l'information d'identification 26. Le mot de code commande un générateur de pseudo hasard 30 qui délivre à son tour des pointeurs 31 pour une table 32 de 256 codes de permutation. A chaque ligne du signal vidéo, la table sélectionne parmi les lignes du buffer celle qui permet la dé-permutation des lignes.

Il est possible d'entrer et de sortir les lignes 18 du buffer dans un ordre quelconque selon le principe illustré dans la figure 2.

Cette figure 2 montre schématiquement une ligne 18 de la mémoire buffer comprenant les 3 x 256 segments 19 de 8 bits formant une ligne du signal vidéo. Dans cette mémoire, les segments ou échantillons 20 sont introduits séquentiellement dans des positions successives ou cellules de la mémoire. La figure 2 montre que l'introduction d'un nouveau segment 20 dans une des positions de la mémoire provoque la sortie du segment 21 qui était stocké dans cette position, de sorte que la mémoire est toujours remplie de 32 lignes et que chaque ligne 18 du buffer est toujours remplie de 256 segments.

Comme mentionné ci-dessus, la table 32 sélectionne, parmi les lignes 18 du buffer, celles qui permettent la dépermutation des lignes du signal vidéo, ceci en fonction de la clé de débrouillage constituée par le mot de code.

A la sortie de la mémoire du buffer 9, les données sont reconverties en signaux analogiques par un convertisseur numérique/analogique de 8 bits. On obtient ainsi un signal SECAM ou PAL(NTSC) débrouillé pour affichage sur le téléviseur.

Le brouillage/débrouillage tel qu'indiqué ci-dessus, offre une excellente sécurité contre le piratage pour les raisons suivantes :
- Le nombre de permutations de lignes possibles est si grand qu'il est difficile de trouver la "bonne combinaison", soit par hasard, soit par corrélation.
- Le code ou clé de permutation est transmis en temps réel, de sorte que même si un pirate trouve la bonne permutation, celle-ci n'est valable que pour un instant, par exemple une seconde.
- Le code de permutation est transmis chiffré, par exemple, mais non exclusivement selon le système DES, pratiquement incassable.
- Le déchiffrage des codes de permutation se fait dans une carte intelligente à microprocesseur (carte CPTV), comme on le verra plus loin, offrant toute la sécurité nécessaire. Comme alternative, le microprocesseur pourrait faire partie d'un autre élément du décodeur, au lieu d'être inclus dans la carte CPTV.
- Les cartes CPTV sont reprogrammables, ce qui permet de changer périodiquement les clés de codage.

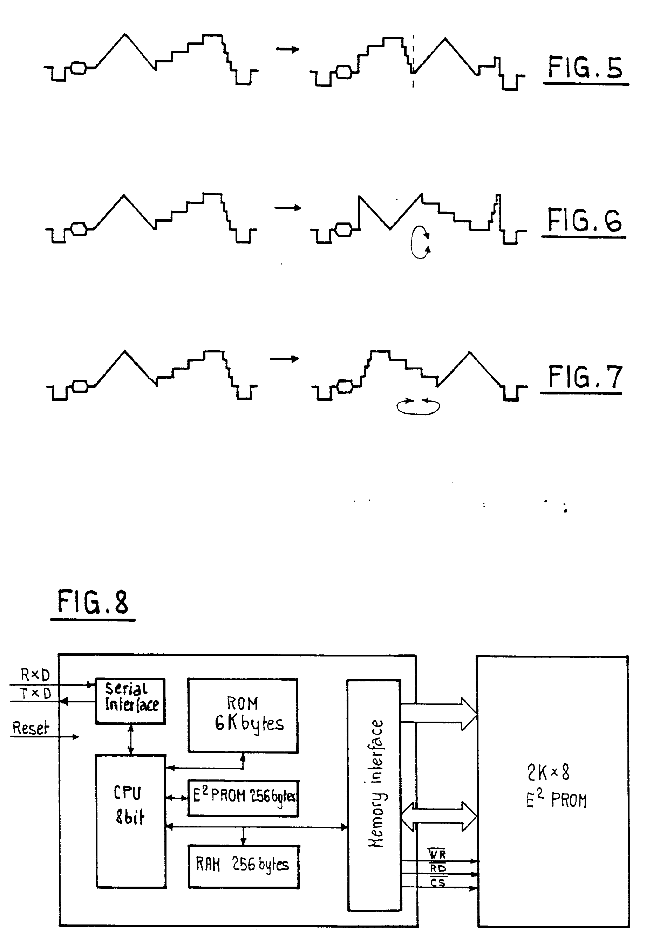

Dans la version brouillage profond, on effectue en plus de la permutation des lignes comme indiqué ci-dessus, les brouillages suivants :
- selon la figure 5, une rotation de la ligne active sur elle-même, c'est-à-dire par exemple que la partie active de la ligne commence au milieu de la vraie ligne et est suivie, après la fin de la vraie ligne, du début de cette même ligne,
- selon la figure 6, une inversion de la polarité de la ligne active par rapport au niveau correspondant à 50 IRE. Cette opération permet d'effectuer une adaptation automatique du niveau de luminosité pour garder celui-ci constant. Ceci permet de supprimer la possibilité de reconnaissance d'image par changement de l'éclairage ambiant.
- selon la figure 7, une symétrie miroir de la ligne vidéo selon laquelle la partie active de la ligne vidéo subit une symétrie axiale d'axe perpendiculaire au niveau noir de la vidéo.

Lors du brouillage, seule la partie active de la ligne est permutée, y compris les lignes de retour du balayage vertical, ce qui permet le brouillage des données de télétexte, mais que dans tous les cas, la synchronisation horizontale reste inchangée.

La carte CPTV 12 est une carte active comprenant un microprocesseur muni de manière interne d'une mémoire non volatile (RAM avec pile, NVRAM ou E2PROM) illisible de l'extérieur (sécurité) et une horloge. Selon la figure 8, la carte CPTV comprend deux circuits électroniques A et B : le circuit A est un dispositif de sécurité avec CPU 40 et mémoires associées telles que ROM 41, E2PROM 42, RAM 43, ainsi qu'un interface de mémoire 44, et le circuit B est une mémoire séparée E2PROM de 2 Kbytes. La carte CPTV se présente en principe sous la forme d'une carte de crédit. Elle rassemble les quatre fonctions suivantes :
- décodage de la clé de permutation transmise cryptée, par exemple selon le système DES. La carte reçoit du microprocesseur 11 la clé cryptée et retourne, lorsque l'émission a été achetée, la clé de débrouillage permettant de dépermuter les lignes du signal vidéo.
- Mémorisation de la liste des numéros, ou codes des émissions achetées et des abonnements à un genre particulier d'émissions (émissions sportives, culturelles, cinéma, cuisine, etc.). Cette mémorisation de la liste des émissions achetées permet à la carte CPTV de ne retourner au microprocesseur le code de débrouillage que si l'émission a bien été achetée. En outre, et dans un but de statistique et de facturation, il est possible de connaître les émissions achetées.
- Gestion du crédit. La carte CPTV mémorise une information représentative du crédit qu'elle peut utiliser pour l'achat d'émissions ou d'abonnements. Pour acheter une émission, l'utilisateur fait apparaître, par action sur le clavier 13, la liste des émissions prévues reçues au préalable de la station de tête et mémorisées dans le microprocesseur 11 du décodeur 7 et qui sont sélectionnées par menu et affichées sur l'écran du téléviseur. Le téléviseur affiche, en plus du titre de l'émission, son numéro, prix, date d'émission et d'autres informations utiles si nécessaire. L'utilisateur sélectionne alors le numéro de l'émission qu'il désire en actionnant la touche correspondante du clavier 13. Si le crédit à disposition mémorisé dans la carte 12 est suffisant pour l'achat en question, l'émission ou l'abonnement acheté est mémorisé dans la carte sur la liste des émissions achetées et le montant correspondant est déduit du crédit disponible. Lorsque l'émission achetée est diffusée, elle est identifiée par la carte par comparaison avec son numéro ou code inscrit sur la liste des émissions achetées et la carte retourne au microprocesseur le code ou clé de débrouillage.
- La quatrième fonction de la carte CPTV est une fonction de mesure du temps par une horloge. Cette fonction est utilisée lors de certaines émissions, par exemple de jeux interactifs entre l'utilisateur et la station de tête.

On voit que la carte CPTV 12 mémorise toutes les informations confidentielles ou secrètes nécessaires au débrouillage du signal vidéo, telles que clés de débrouillage et le crédit. La carte CPTV gère le crédit, mémorise les émissions achetées et permet le débrouillage des émissions achetées. Elle est effaçable, toutes les données mémorisées pouvant être modifiées. Il est ainsi possible de modifier les clés de débrouillage et de réutiliser la carte une fois remplie.

Pour toutes les opérations à effectuer, l'utilisateur est guidé par le décodeur lui-même qui affiche des textes et instructions de manipulation sur le téléviseur par l'intermédiaire du générateur de texte 14. Dans ce but, une partie de l'information susceptible d'être affichée sous forme de texte est mémorisée en permanence dans une mémoire morte du microprocesseur 11, cette partie correspondant en principe à des instructions de manipulation, et l'autre partie des informations est mémorisée temporairement dans une mémoire vive du microprocesseur 11, cette deuxième information étant diffusée par la station de tête et concernant plus particulièrement les programmes qui seront diffusés.

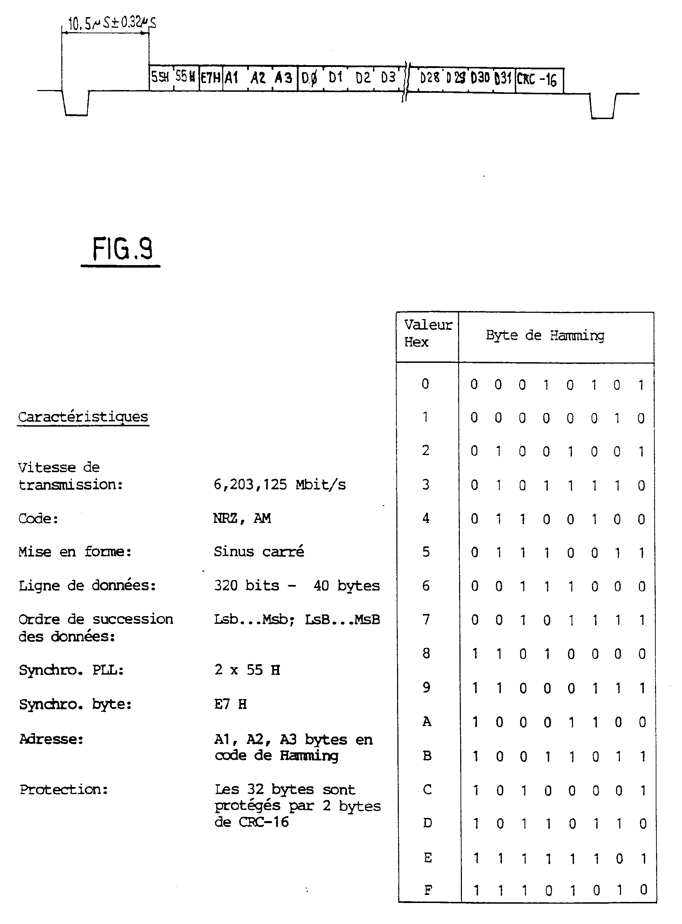

La figure 9 montre la structure d'une ligne de retour du balayage vertical du signal vidéo. On voit que cette ligne est formée de 32 bytes de données de télétexte et qu'elle comprend en outre des informations de synchronisation et des adresses en code Hamming pour la détection/correction d'erreurs. Les 32 bytes de données de télétexte sont protégées par 2 bytes de code de détection d'erreurs CRC-16.

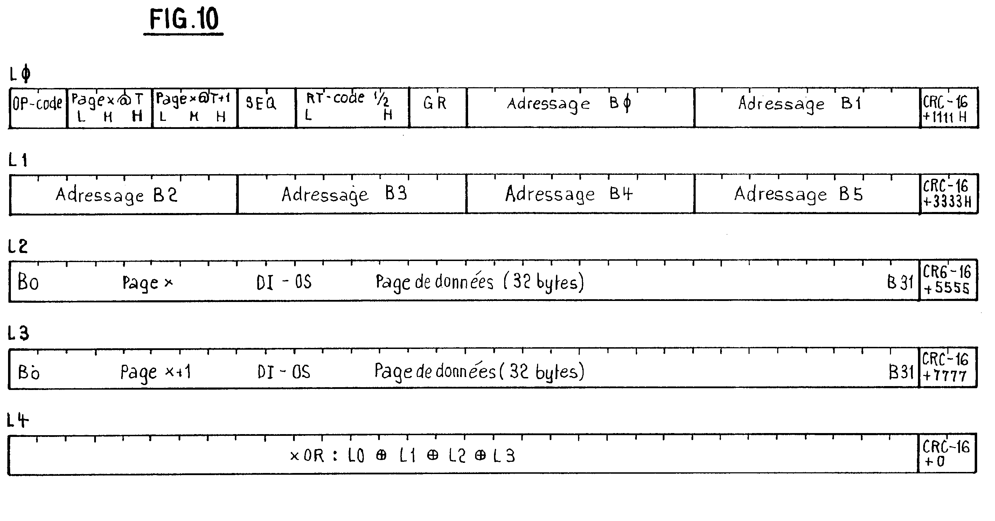

Pour illustrer l'organisation des données dans les lignes du signal vidéo, la figure 10 montre un exemple de la structure des données physiques dans le cas d'une transmission de données par le système Didon (France). A chaque trame du signal vidéo est transmise une ligne telle que L0, L1, L2, L3 ou L4. Ainsi, un groupe de 5 lignes (L0 à L4) est transmis toutes les 5 trames. On voit plus particulièrement que les lignes L2 et L3 transmettent des pages de données de 32 bytes chacune. Les adressages B0 à BS permettent de sélectionner un groupe de souscripteurs parmi 224 groupes, chacun de 240 souscripteurs. Les adressages comprennent le numéro du groupe, l'action à exécuter, par exemple recharge de crédit, et la liste des souscripteurs concernés par cette action particulière. La synchronisation est assurée par un reste de CRC-16 comme indiqué. En outre, chaque ligne est protégée par un CRC-16 qui permet une détection d'erreur et chaque groupe de 5 lignes est protégé par un OU-EXCLUSIF qui permet de corriger une ligne erronée. L'avantage d'une organisation des données selon la figure 10 est qu'elle permet de retrouver très facilement l'information là où elle se trouve dans le décodeur.

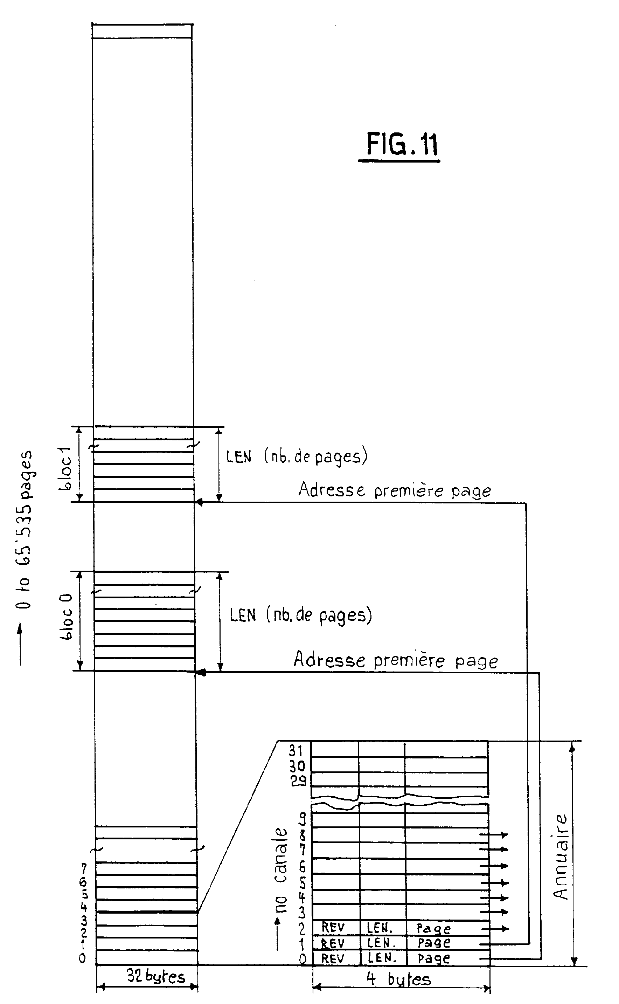

La figure 11 montre un autre exemple de structure des données dans le cas du système DI-OS (Didon operating system). On voit que les données sont organisées en 65'536 pages de 32 bytes chacune. Les quatre premières pages (0 à 3) de la structure de données comprennent une table qui délivre pour chaque canal susceptible d'être transmis l'adresse de la première page d'un bloc de pages correspondant à ce canal ainsi que la longueur du bloc qui est identique au nombre de pages de ce bloc et le numéro des révisions ou modifications qui ont été apportées à ce bloc. L'avantage de l'organisation selon la figure 11 est qu'elle conduit à une structure très souple pour la transmission des données ainsi qu'une extension future très souple.

## Revendications

1. Décodeur pour un système de télévision à péage comprenant une mémoire (9) agencée pour recevoir un signal vidéo embrouillé par permutation des lignes, dans lequel chaque ligne est échantillonnée et numérisée en un nombre d'échantillons, et des moyens pour débrouiller le signal vidéo mémorisé selon un code de débrouillage variable,
caractérisé en ce que ladite mémoire (9) est constituée par un buffer de lignes (18), par exemple 32 lignes, où lesdits échantillons (20) sont introduits séquentiellement dans les cellules (19) successives, chaque ligne (18) du buffer étant constituée d'autant de cellules qui sont nécessaires pour stocker le nombre d'échantillons (20, 21) d'une ligne du signal vidéo,
l'entrée de chaque échantillon (20) dans une cellule du buffer provoquant la sortie de cette cellule de l'échantillon (21) mémorisé dans cette même cellule, de sorte que ladite mémoire (9) est toujours remplie du nombre de lignes et que chaque ligne du buffer (18) est toujours remplie du nombre d'échantillons (21 ou 20) qu'elle peut contenir,
l'ordre de sortie des lignes du buffer mémorisées (18) pour effectuer le débrouillage étant déterminé par la sélection, sous commande dudit code de débrouillage, parmi les lignes du buffer, de celles qui permettent la dé-permutation des lignes.

2. Décodeur selon la revendication 1, caractérisé en ce que chaque ligne du signal vidéo numérisée comprend 3 ou 4 fois 256 échantillons de 8 bits chacun, ces échantillons venant se stocker dans un nombre égal de cellules (19) d'une ligne (18) du buffer.

3. Décodeur selon l'une quelconque des revendications précédentes, caractérisé en ce que le buffer comporte 32 lignes.

4. Décodeur selon l'une quelconque des revendications précédentes, pour le décodage d'un signal vidéo dans lequel des données sont stockées dans les lignes de retour du balayage vertical et seule la partie active de la ligne est permutée, y compris les lignes de retour du balayage vertical, la synchronisation horizontale n'étant pas permutée, de telle sorte que lesdites données sont brouillées en même temps que l'image.

5. Décodeur selon l'une quelconque des revendications précédentes, pour le décodage d'un signal vidéo dans lequel, en plus de la permutation des lignes, chaque ligne ainsi permutée subit en outre une rotation de la partie active de la ligne sur elle-même.

6. Décodeur selon l'une quelconque des revendications précédentes, caractérisé en ce que les moyens pour débrouiller le signal vidéo mémorisé comprennent : un système de déchiffrage (29) d'une carte CPTV délivrant un mot de code déchiffré, et un générateur de pseudo-hasard (30) qui délivre des pointeurs (31) à une table (32) contenant un nombre de codes de permutation, laquelle table sélectionne parmi les lignes (18) du buffer, celles qui permettent la dé-permutation.

7. Système de télévision à péage comportant, à l'émission, des moyens pour embrouiller un signal vidéo par permutation des lignes, dans lequel chaque ligne est échantillonnée et numérisée en un nombre d'échantillons, et des moyens pour transmettre le signal vidéo embrouillé avec, en temps réel, une clé de transmission variable (34), et à la réception, un décodeur selon l'une quelconque des revendications précédentes, le décodeur comportant des moyens (6, 29) pour recevoir ladite clé de transmission (34) et d'en fournir ledit code de débrouillage.

## Patentansprüche

1. Decodierer für ein Fernsehsystem mit Gebührenpflicht, umfassend einen Speicher (9), der eingerichtet ist, um ein durch Permutation der Zeilen verwürfeltes Videosignal zu empfangen, in dem jede Zeile zu einer Zahl von Abtastwerten abgetastet und digitalisiert wird, und Mittel zum Auflösen des gespeicherten Videosignals gemäß einem veränderlichen Auflösecode,
dadurch **gekennzeichnet,** daß der Speicher (9) aus einem Zeilenpuffer (18), beispielweise für 32 Zeilen, besteht, wo die Abtastwerte (20) sequentiell in aufeinanderfolgende Zellen (19) eingegeben werden, wobei jede Zeile (18) des Puffers aus so viel Zellen besteht, wie erforderlich sind, um die Zahl von Abtastwerten (20, 21) einer Zeile des Videosignals zu speichern,
- wobei die Eingabe jedes Abtastwertes (20) in eine Zelle des Puffers die Ausgabe dieser Zelle des in derselben Zelle gespeicherten Abtastwertes (21) hervorruft derart, daß der Speicher (9) stets mit der Zahl von Zeilen gefüllt ist und daß jede Zeile des Puffers (18) stets mit der Zahl von Abtastwerten (21 oder 20) gefüllt ist, die sie enthalten kann,
- wobei die Ausgabefolge der gespeicherten Zeilen des Puffers (18) zum Bewirken der Auflösung durch die Auswahl unter Steuerung des Auflösecodes unter den Zeilen des Puffers von denjenigen bestimmt ist, die die De-Permutation der Zeilen gestatten.

2. Decodierer nach Anspruch 1, dadurch **gekennzeichnet,** daß jede Zeile des digitalisierten Videosignals drei oder viermal 256 Abtastwerte von jeweils 8 Bit umfaßt, wobei diese Abtastwerte gerade in einer gleichen Zahl von Zellen (19) einer Zeile (18) des Puffers gespeichert worden sind.

3. Decodierer nach einem beliebigen der vorhergehenden Ansprüche, dadurch **gekennzeichnet,** daß der Puffer 32 Zeilen umfaßt.

4. Decodierer nach einem beliebigen der vorhergehenden Ansprüche, für die Decodierung eines Videosignals, in dem Daten in den Rücklaufzeilen der Vertikalablenkung gespeichert sind und lediglich der aktive Teil der Zeile permutiert ist, einschließlich der Rücklaufzeilen der Vertikalablenkung, wobei die horizontale Synchronisation nicht permutiert ist derart, daß die Daten gleichzeitig wie das Bild verwürfelt werden.

5. Decodierer nach einem beliebigen der vorhergehenden Ansprüche, für die Decodierung eines Videosignals, in dem zusätzlich zu der Permutation der Zeilen jede so permutierte Zeile außerdem eine Rotation des aktiven Teils der Zeile auf sich selbst erfährt.

6. Decodierer nach einem beliebigen der vorhergehenden Ansprüche, dadurch **gekennzeichnet**, daß die Mittel zum Auflösen des gespeicherten Videosignals umfassen: ein Entschlüsselungssystem (29) einer Pay-TV-Karte, das ein dechiffriertes Codewort abgibt, und einen Pseudo-Zufallsgenerator (30), der Pointer (31) an eine Tabelle (32) abgibt, die eine Zahl von Permutationscodes enthält, wobei die Tabelle unter den Zeilen (18) des Puffers diejenigen auswählt, die die De-Permutation gestatten.

7. Fersehsystem mit Gebührenpflicht, umfassend beim Senden Mittel zum Verwürfeln eines Videosignals durch Permutation der Zeilen, in dem jede Zeile in einer Zahl von Abtastwerten abgetastet und digitalisiert wird, und Mittel zum Übertragen des verwürfelten Videosignals mit einem veränderlichen Übertragungsschlüssel (34) in Echtzeit und beim Empfang einen Decodierer gemäß einem beliebigen der vorhergehenden Ansprüche, wobei der Decodierer Mittel (6, 29) zum Empfangen des Übertragungsschlüssels (34) und zum Liefern des Auflösecodes daraus umfaßt.

## Claims

1. A decoder for a pay-TV system comprising a memory (9) arranged to receive a video signal scrambled by line permutation, in which each line is segmented and digitalized into a number of samples, and means for descrambling the memorized video signal according to a variable descrambling code,
characterized in that said memory (9) is constituted of a number of buffer lines (18), for example 32 lines, wherein said samples (20) are sequentially introduced into successive cells (19), each buffer line (18) being constituted of as many cells as are necessary to store the number of samples (20, 21) of one line of the video signal,
the entry of each sample (20) in a cell of the buffer causing outputting of the sample (21) previously memorized in the same cell, such that the memory (9) always remains filled with its number of lines, and each buffer line (18) is always filled with the number of samples (20,21) that it can contain,
the order of extraction of the memorized buffer lines (18) to carry out descrambling being determined by the selection, from the buffer lines (18), of those buffer lines which permit de-permutation of the lines, said selection being controlled by the descrambling code.

2. A decoder according to claim 1, characterized in that each digitalized line of the video signal comprises 3 or 4 times 256 samples each of 8 bits, these samples being stored in an equal number of cells (19) of one of said buffer lines (18).

3. A decoder according to any preceding claim, characterized in that the memory has 32 buffer lines.

4. A decoder according to any preceding claim, for decoding video signals wherein data is stored in lines corresponding to the vertical return of the scanning of the video signal, and only the active part of the line is permuted including the vertical scanning return lines, while the horizontal synchronization is not modified, in such a manner that said data is scrambled at the same time as the image.

5. A decoder according to any preceding claim, for decoding video signals wherein in addition to the permutation of the lines of the video signal, each thus permuted line is submitted to a rotation of the active part of the line about itself.

6. A decoder according to any preceding claim, characterized in that the means for descrambling the memorized video signal comprise : a deciphering system (29) of a CPTV card which delivers a deciphered code, and a pseudo-random generator (30) which delivers input pointers (31) to a table (32) containing a number of codes of permutation, which table (32) selects from the buffer lines (18) those buffer lines that permit de-permutation.

7. A pay-TV system comprising, at the emission, means for scrambling a video signal by line permutation, wherein each line is sampled and digitalized into a number of samples, and means for transmitting the scrambled video signal in real time with a variable transmission key (34) and, at the reception, a decoder according to any one of the preceding claims, the decoder including means (6, 29) for receiving said transmission key (34) and deriving therefrom said descrambling code.
